# NEUE EUROPÄISCHE PATENTSCHRIFT

(11) **EP 0 797 859 B2**
(45) Veröffentlichungstag und Bekanntmachung des Hinweises auf die Entscheidung über den Einspruch: **16.11.2005**
(45) Hinweis auf die Patenterteilung: 02.06.1999
(21) Anmeldenummer: 95931227.3
(22) Anmeldetag: 31.08.1995
(51) Int. Cl.: H02K 5/14

(54) **BÜRSTENTRAGEPLATTE**
BRUSH SUPPORT PLATE
PLAQUE PORTE-BALAI

(30) Priorität: 15.12.1994 DE 4444645
(43) Veröffentlichungstag der Anmeldung: 01.10.1997
(73) Patentinhaber: ITT Automotive Europe GmbH, 60488 Frankfurt am Main (DE)
(72) Erfinder: KIEHNLE, Günter, D-75031 Eppingen (DE); WALTHER, Bernd, D-74321 Bietigheim-Bissingen (DE); HEUBERGER, Christof, D-71672 Marbach (DE)
(74) Vertreter: Dreiss, Fuhlendorf, Steimle & Becker
(86) Internationale Anmeldenummer: PCT/EP1995/003415
(87) Internationale Veröffentlichungsnummer: WO 1996/019030

(56) Entgegenhaltungen:
- EP-A- 0 235 443
- WO-A-94/10738
- US-A- 4 673 837
- US-A- 4 845 396

## Beschreibung

Die Erfindung bezieht sich auf eine Bürstentrageplatte nach dem Oberbegriff des Patentanspruches 1. Eine derartige Bürstentrageplatte ist von der Siemens AG, 80506 München, vorbenutzt worden.

Davon unterschreidet sich die Erfindung durch den kennzeichnenden Teil des Anspruchs 1.

Weitere Ausgestaltungen der Erfindung sind in den Unteransprüchen beschreiben.

Die zuvor beschriebene Erfindung wird anhand eines Ausführungsbeispieles, dargestellt in zwei Fig., erläutert.

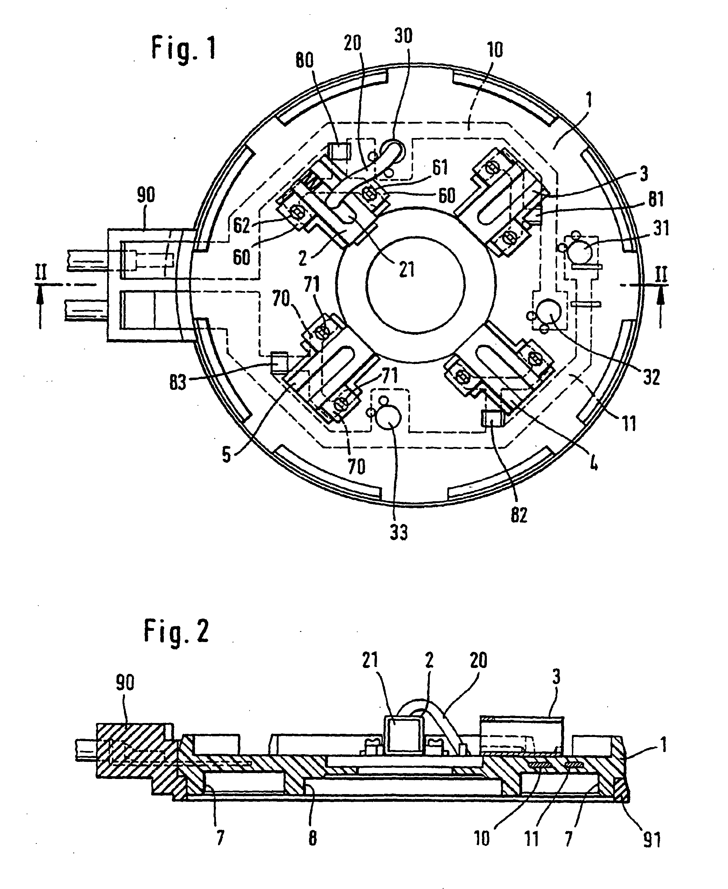

- Fig. 1: zeigt die Draufsicht auf eine Bürstentrageplatte während
- Fig. 2: einen Schnitt entlang der Linie II-II zeigt.

Die Bürstentrageplatte 1 trägt auf ihrer oberen Seite mehrere Köcher 2, 3, 4, 5, von denen je zwei parallel geschaltet sind. Die Unterseite der Bürstentrageplatte 1 weist eine kreisförmige Vertiefung 8 auf, in die ein Lager über eine Teillänge eingesteckt werden kann. In diesem Zusammenhang wird auf die WO 94/10738 verwiesen. Um die zentrale Vertiefung 8 herum verläuft konzentrisch eine Nut 7, die in etwa die gleiche Tiefe aufweist, wie die zentrale Vertiefung 8.

In der Bürstentrageplatte verlaufen zwei Leiterbahnen 10, 11.

Sie werden bei der Herstellung der Bürstentrageplatte im Spritzverfahren vom Plastikmaterial, aus dem die Platte besteht, umgossen. Dies bedeutet, daß die Leiterbahn 10, 11 insbesondere gegenüber den Köchern 2, 3, 4, 5, die auf der Oberseite der Bürstentrageplatte 1 angebracht werden, elektrisch isoliert sind.

In den Köchern sind Bürsten geführt, die über Litzen elektrisch leitend mit den Leiterbahnen verbunden sind. Exemplarisch wird dies für einen der Köcher beschrieben.

Um die Litze 20 der Bürste 21 im Köcher 2 mit der Leiterbahn 10 kontaktieren zu können, ist in der Bürstentrageplatte eine Aussparung 30 (bzw. 31, 32, 33 für die anderen Litzen) vorgesehen, die bis zu der Leiterbahn 10 (bzw. 11) reicht, d. h. die Leiterbahnen sind punktuell freigelegt, und können an diesen Stellen mit den Litzen z. B. verlötet oder verschweißt werden. Um den Befestigungsvorgang zu erleichtern, sind Aussparungen nicht nur auf der Oberseite sondern auch auf der Unterseite der Bürstentrageplatte, die sich jeweils gegenüberliegen, vorgesehen. Dies ermöglicht es z.B. Schweißelektroden an die Leiterbahn heranzuführen.

Die Köcher für die Bürsten werden wie folgt befestigt:

Die Köcher werden aus einem Blech gefaltet, wobei seitliche Befestigungsohren 60 vorgesehen werden, die jweils mit einem Befestigungsloch versehen sind.

Die Befestigungsohren 60 erstrecken sich parallel zur Leiterplatte 1.

An den Leiterbahnen 10, 11 sind für jeden Köcher 2 Befestigungsbahnen 70 vorgesehen, an denen senkrecht hervorstehende Zungen 71 vorgesehen sind (exemplarisch dargestellt für Köcher 5; strichpunktiert).

Die Höhe der Zungen ist so ausgelegt, so daß sie aus der oberen Fläche der Leiterplatte herausragen. Sie sind so positioniert, daß sie mit den Löchern 61 und 62 fluchten, so daß durch Umbiegen der durch die Löcher 60, 61 hervorstehenden Zungen die Köcher sicher auf der Bürstentrageplatte gehalten werden können. Die Haltebahnen 70 sind über Trennstellen 80, 81, 82, 83 mit den Leiterbahnen 10, 11 verbunden.

Die Trennstellen 80, 81, 82, 83 werden entweder vor oder nach dem Spritzgießvorgang zur Herstellung der Bürstentrageplatte durchtrennt, so daß zumindest die Köcher deren Bürsten nicht mit der zugehörigen Leiterbahn kontaktiert sind, von der entsprechenden Leiterbahn elektrisch isoliert sind.

Die beiden Leiterbahnen 10, 11 verlaufen in etwa halbkreisförmig in der Bürstentrageplatte 1 und schließen zusammen in etwa einen Kreis ein.

Das eine Ende einer jeden halbkreisförmigen Leiterbahn 10, 11 mündet in ein Steckergehäuse 90, wo sie entweder mit nach außen führenden Leitungen verbunden sind, oder aber in eine Steckaufnahme einmünden.

Das Steckergehäuse 90 wird zusammen mit einer Dichtung 91 an die Bürstentrageplatte angespritzt. Das Material des Steckergehäuses und der Dichtung besteht aus einem Material, das etwas weicher ist, als das Material der Bürstentrageplatte. Die Dichtung 91 verläuft in einer nach unten und zur Seite hin offenen Nut, wobei die Dichtung 91 sowohl nach unten als auch radial nach außen hervorragt. Eine Dichtwirkung besteht somit sowohl gegenüber einem topfförmigen Ge-häuse, dessen Rand über den Rand der Bürstentrageplatte geschoben wird, als auch gegenüber einer Flanschfläche an einem Gehäuse für das Triebwerk bzw. Pumpe, das vom Elektromotor angetrieben werden soll. Es wird in diesem Zusammenhang ebenfalls auf die WO 94/10738 verwiesen.

## Patentansprüche

1. Bürstentrageplatte (1) aus Kunststoff mit in der Trageplatte (1) verlaufenden flachen, Leiterbahnen (10, 11) zur elektrischen Verbindung von einem Steckergehäuse (90) zu Bürsten (21), wobei auf der Seite der Bürstentrageplatte (1), die die Bürsten (21) trägt, in der Bürstentrageplatte (1) Aussparungen vorgesehen sind, die bis zu den Leiterbahnen (10, 11) reichen, wobei auch auf der anderen (unteren) Seite der Bürstentrageplatte (1) Aussparungen vorgesehen sind, die den oben liegenden Aussparungen gegenüber liegen und die ebenfalls bis zu den Leiterbahnen (10, 11) reichen, so dass Anschlusslitzen (20) der Bürsten (21) an den Leiterbahnen (10, 11) befestigt sind **dadurch gekennzeichnet, dass** Haltebahnen (70) vorgesehen sind, die an durchtrennten Trennstellen (80, 81, 82, 83) mit den Leiterbahnen (10, 11) verbunden waren, wobei die Haltebahnen (70) über senkrecht abgebogene, aus der oberen Seite der Bürstentrageplatte (1) hervorragende Laschen (71) verfügen, an denen Köcher (2, 3, 4, 5) zur Führung von den Bürsten (21) gehalte sind.

2. Bürstentrageplatte nach Anspruch 1, **dadurch gekennzeichnet, daß** an der unteren Seite der Bürstentrageplatte eine Dichtung (91) angespritzt ist, die sowohl über die Unterseite als auch radial nach außen über den Rand der Bürstentrageplatte (1) hinausreicht.

3. Bürstentrageplatte nach Anspruch 2, **daclurch gekennzeichnet,** daß am Rand der Trageplatte (1) ein Steckergehäuse (90) vorgesehen ist, das einstückig mit dem Dichtring (91) ausgebildet ist.

4. Bürstentrageplatte nach Anspruch 1, **dadurch gekennzeichnet, daß** die Bürstentrageplatte vier Bürsten trägt, von denen je zwei parallel geschaltet sind.

## Claims

1. Brush support plate (1) made of plastic material including flat conductor paths (10, 11) for the electrical connection of a plug housing (90) and brushes (21), wherein on the side of the brush support plate (1) on which the brushes are mounted, recesses are provided in the brush support plate (1) which reach up to the conductor paths (10, 11), whereby recesses are also provided on the other (bottom} side of the brush support plate (1) which are opposite to the top side recesses and also reach up to the conductor paths (10, 11) so that the strands (20) are attached to the conductor paths (10, 11), **characterized in that**, attachment paths (70) are provided, which have been connected at disconnecting points (80, 81, 82, 83) to the conductor paths (10, 11), whereby the attachment paths (70) having vertically deflected, over the top side of the brush support plate (1) projected tongues (71), at which casings (2, 3, 4, 5) are mounted for guiding the brushes (21).

2. Brush support plate as claimed in claim 1, **characterized in that** a seal (91) is injection-molded on the bottom side of the brush support plate and reaches-over the bottom side and radially outwardly beyond the rim of the brush support plate (1).

3. Brush support plate as claimed in claim 2, **characterized in that**, at the rim of the support plate (1), a plug housing (90) is provided which is integrally designed with the ring seal (91).

4. Brush support plate as claimed in claim 1, **characterized in that** the brush support plate carries four brushes, two of them being connected in parallel in each case.

## Revendications

1. Plaque porte-balais (1) réalisée en matière plastique et comportant des voies conductrices plates (10, 11), qui s'étendent dans la plaque de support (1) pour établir la liaison électrique entre un boîtier de connecteur (90) et des balais (21), dans laquelle des évidements, qui s'étendent jusqu'aux voies conductrices (10, 11), sont aménagés dans la plaque porte-balais (1), dans la face de cette plaque, qui porte les balais (21), dans laquelle sur l'autre face (inférieure) de la plaque porte-balais (1) sont également prévus des évidements, qui sont situés à l'opposé des évidements supérieurs et s'étendent également jusqu'aux voies conductrices (10, 11), de sorte que des tresses de raccordement (20) des balais (21) sont fixées aux voies conductrices (10, 11) **caractérisée en ce qu'**il est prévu des bandes de fixation (70) qui étaient reliées, au niveau d'emplacements de séparation séparés (80, 81, 82, 83) aux voies conductrices (10, 11), les bandes de fixation (70) comportant des languettes (71) qui sont repliées perpendiculairement et font saillie sur la face supérieure de la plaque porte-balais (1) et sur lesquelles sont retenus des logements (2, 3, 4, 5) pour le guidage des balais (21).

2. Plaque porte-balais selon la revendication 1, **caractérisée en ce que** sur la face inférieure de la plaque porte-balais est moulée par injection une garniture d'étanchéité (91), qui fait saillie sur la face inférieure aussi bien radialement qu'extérieurement au-dessus du bord de la plaque porte-balais (1).

3. Plaque porte-balais selon la revendication 2, **caractérisée en ce que** sur le bord de la plaque porte-balais (1) est prévu un boîtier de connecteur (90), qui est formé d'un seul tenant avec la bague d'étanchéité (91).

4. Plaque porte-balais selon la revendication 1, **caractérisée en ce que** la plaque porte-balais porte quatre balais, branchés respectivement deux à deux en parallèle.
